Europäisches Patentamt

European Patent Office

Office européen des brevets

(19)

(11) Veröffentlichungsnummer : **0 143 104**
**B1**

(12) **EUROPÄISCHE PATENTSCHRIFT**

(45) Veröffentlichungstag der Patentschrift :
07.09.88

(21) Anmeldenummer : **84890176.5**

(22) Anmeldetag : **21.09.84**

(51) Int. Cl.⁴ : **G 08 B   3/10, A 63 B  29/02,
A 62 B 33/00**

(54) **Suchgerät für Lawinenverschüttete.**

(30) Priorität : **23.09.83 AT 3388/83**

(43) Veröffentlichungstag der Anmeldung :
**29.05.85 Patentblatt 85/22**

(45) Bekanntmachung des Hinweises auf die Patenterteilung : **07.09.88 Patentblatt 88/36**

(84) Benannte Vertragsstaaten :
**AT CH DE FR IT LI**

(56) Entgegenhaltungen :
**DE-A- 2 553 913**
**DE-A- 3 046 895**
**DE-B- 2 659 901**

(73) Patentinhaber : **MOTRONIC Electronische Geräte Ges.m.b.H.**
**A-8522 Gross-St.Florian (AT)**

(72) Erfinder : **Jöbstl, Franz**
**Aichegg 105a**
**A-8541 Schwanberg (AT)**
Erfinder : **Mothwurf, Ewald**
**Unterer Plattenweg 14**
**A-8044 Graz (AT)**

(74) Vertreter : **Gibler, Ferdinand, Dipl.Ing.Dr.tech.**
**Dorotheergasse 7/14**
**A-1010 Wien (AT)**

EP 0 143 104 B1

**Beschreibung**

Die Erfindung bezieht sich auf ein Suchgerät für Lawinenverschüttete, das eine elektronische Schaltung mit einer Sende- und Empfangsfunktion für minestens eine Suchfrequenz enthält und einen, den Schallwandler enthaltenden Ohrhörer für die Empfangsfunktion aufweist, der in das Gerät einsteckbar ist, wobei ein Schalter vorgesehen ist, der das Gerät bei eingestecktem Ohrhörer auf Sendebetrieb und beim Herausziehen des Ohrhörers auf Empfang schaltet.

Es sind mehrere Suchgeräte für Lawinenverschüttete bekannt, die nach dem Sender/Empfänger-Prinzip auf einer der Frequenzen 2,275 (F1) und 457 KHz oder auch auf beiden Frequenzen (F2) arbeiten.

Bei bekannten Geräten ist der Ohrhörer im Gerät integriert und ein Schalter neben dem Ohrhörerschacht angeordnet, mit dem alle Schaltfunktionen ausgeführt werden, und zwar AUS, Senden und Empfangen in vier Empfindlichkeitsstufen. Dieses bekannte Gerät ist sehr kompakt aufgebaut. Die in der Praxis selten vorkommende Situation einer Nachlawine, die jedoch als Gefahr latent vorhanden ist, erfordert eine schnelle Umschaltung auf Senden, die bei diesen Geräten jedoch nur relativ umständlich durch Rückschalten des Gerätes mit dem Schalter auf Senden erfolgen muß.

Weiters wurde durch die DE-OS-30 46 895 ein Gerät vorgeschlagen, bei dem die Schaltfunktionen auf drei Punkte aufgeteilt sind, und zwar EIN/AUS Schalten der Batterie mit einem mit einem Befestigungselement für ein Halsband gekoppelten Schalter, einem Umschalter für die Betriebsart, der durch das Einstecken eines Ohrhörersteckers in eine entsprechende im Gehäuse angeordnete Buchse betätigbar ist und einem separaten Lautstärkeregler.

Bei diesen Geräten kann die Umschaltung auf Senden zwar einfach durch Abziehen des Ohrhörersteckers erfolgen, doch ergibt sich bei diesen Geräten der Nachteil, daß der Ohrhörer vom Gerät getrennt ist. Weiters kann der eher fragile Stecker bzw. die entsprechende Steckerbuchse bei einer heftigen Betätigung in einer Streßsituation, wie sie bei einer Nachlawine entsteht, leicht beschädigt werden. Ein weiterer Nachteil dieses Gerätes besteht auch darin, daß der Ohrhörer an der Unterseite des Gerätes eingesteckt werden muß, wozu das Gerät aus der Tragtasche genommen werden muß, was zu einem entsprechenden Zeitverlust führt.

Bei einem anderen bekannten Gerät ist keine manuelle Lautstärkenregelung vorhanden und für das Ein- und Ausschalten sowie für die Umschaltung der Betriebsart ist ein Schiebeschalter vorgesehen, mit dem gleichzeitig ein Ohrhörerfach verschließbar ist. Dabei ist dieses Fach geöffnet, wenn der Schalter auf Empfang umgeschaltet ist. Bei diesem Gerät ergibt sich der Nachteil, daß der Schiebeschalter seitlich angeordnet ist und das Gerät zur Betätigung des Schalters aus der Tragtasche genommen werden muß, sowie es beim Einschieben des Gerätes in die Tragtasche nach einer Manipulation des Schalters zu einem Ausschalten des Gerätes kommen kann.

Weiters wurde durch die DE-OS-25 53 913 ein Suchgerät der eingangs erwähnten Art vorgeschlagen, bei dem die Betätigung des die Umschaltung von Sende- auf Empfangsbetrieb bewirkenden Schalters durch den in eine Öffnung einsteckbaren Ohrhörer erfolgt. Dabei sitzt dieser Schalter am Grund dieser Ausnehmung, wobei für die Olive des Ohrhörers noch über diesem Schalter angeordnete Führungen angeordnet sind. Bei dieser Lösung ergibt sich der Nachteil, daß bei herausgezogenem Ohrhörer der die Betriebsart beeinflussende Schalter aufgrund der auf die Olive des Ohrhörers abgestimmten Führungen nur mit extrem dünnen Fingern, wenn überhaupt, und auch das nur mit einer unbehandschuhten Hand betätigt werden kann. Im Falle von Nachlawinen ist daher bei herausgezogenem Ohrhörer kein Umschalten auf Senden möglich, zumindest nicht mit der erforderlichen Geschwindigkeit. Dabei ist auch zu berücksichtigen, daß aufgrund der Abmessungen der Führung für die Olive des Ohrhörers eine solche Umschaltung allenfalls Frauen oder Kindern möglich ist, nicht aber einem erwachsenen Mann, wobei noch im Ernstfall die Streßsituation zu berücksichtigen ist, in der sich ein Verschütteter befindet, was die Schwierigkeiten noch weiter erhöht und überdies ein Ausziehen der Handschuhe unbedingt erforderlich ist, was bei den bei Verschütteten stets gegebenen sehr beengten Platzverhältnissen problematisch ist und überdies die Gefahr von Erfrierungen heraufbeschwört.

Ziel der Erfindung ist es diese Nachteile zu vermeiden und ein Gerät vorzuschlagen, bei dem eine Fehlbedienung weitgehend ausgeschlossen ist und bei dem die nötigen Manipulationen auf ein Mindestmaß reduziert sind und auf einfachste Weise durchgeführt werden können.

Erfindungsgemäß wird dies dadurch erreicht, daß bei herausgezogenem Ohrhörer ein Stößel an der Außenseite des Gerätes zugänglich ist, der zum Notumschalten des Suchgerätes auf Sendebetrieb betätigbar ist und der Ohrhörer mit dem Gerät über eine Verbindungsleitung untrennbar verbunden ist.

Dadurch wird sichergestellt, daß nach dem der Ohrhörer den Empfang bzw. das Wahrnehmen von Signalen herausgenommen und damit das Gerät auf Empfang geschaltet wurde, die im Falle von Nachlawinen notwendige Rückumschaltung auf Sendebetrieb sehr einfach und vor allem auch mit Handschuhen, durch bloßes Niederdrücken des Stößels ohne jeden Zeitverlust erfolgen kann.

Nach einem weiteren Merkmal der Erfindung kann vorgesehen sein, daß eine Umschaltung aus dem notumgeschalteten Zustand Senden, also ohne eingesteckten Ohrhörer, auf Empfang nur mit Einstecken und wieder Herausziehen des Ohrhörers möglich ist.

Durch diese Maßnahme wird sichergestellt, daß ein abermaliges Umschalten auf Empfangsbetrieb, z. B. um verschüttete Kameraden orten zu können, nur bewußt erfolgen kann und nicht durch eine unwillkürliche Bewegung in einer Streßsituation.

Eine in konstruktiver Hinsicht sehr einfache Lösung zeichnet sich dadurch aus, daß der Ohrhörer und die Ohrolive in den Stößel steckbar ist, der verschiebbar im Gehäuse des Gerätes gehalten und mit dem Schalter zur Umschaltung von Empfang auf Senden bzw. umgekehrt mechanisch verbunden ist. Außerdem ergibt sich dadurch ein sehr kompakter Aufbau des Gerätes.

Weiters kann vorgesehen sein, daß der Ohrhörer im eingesteckten Zustand mit dem Stößel abgedichtet ist, um die Schallöffnung der Ohrolive gegen das Eindringen von Wasser zu schützen.

In dieser Hinsicht ist es zweckmäßig, wenn am Stößel ein Dichtring angeordnet ist.

Gleichzeitig wird durch diesen Dichtring auch die nötige Haftung zwischen dem Ohrhörer und dem Stößel auf sehr einfache Weise sichergestellt, die notwendig ist, um den Stößel beim Herausziehen des Ohrhörers mitzunehmen, um die Schaltbewegung zum Umschalten auf Empfang auszuführen.

Nach einem weiteren Merkmal der Erfindung kann vorgesehen sein, daß der Verschiebeweg des Stößels derart ausgebildet ist, daß sein oberer, freier Rand im Schaltzustand Empfangen über die Gehäusewand vorragt und bei Absenken des oberen, freien Randes in die Ebene der den Stößel aufnehmenden Gehäusewand der Schalter auf Senden umschaltbar ist. Diese Maßnahmen erleichtern wesentlich eine Bedienung des Gerätes mit Handschuhen.

Um das Gerät besonders rasch bedienen zu können ist es vorteilhaft, wenn alle Bedienungselemente — ausgenommen der Deckel des Batteriefachs — auf der Oberseite des Gerätes zugänglich sind, wodurch eine Bedienung des Gerätes möglich wird, ohne daß es aus einer Tragtasche entnommen werden muß.

Dies kann auch dadurch erreicht werden, wenn alle Bedienungselemente — ausgenommen der Deckel des Batteriefaches — so angeordnet sind, daß sie im Bereich von verschließbaren Öffnungen der Umhängetasche angeordnet sind.

Nach einem weiteren Merkmal der Erfindung kann vorgesehen sein, daß der Ohrhörer im Zustand Senden die Sendeimpulse als Tonimpulse wiedergibt, solange die Batterie ausreichend geladen ist, und diese akustische Sendekontrolle keine Tonimpulse mehr wiedergibt, wenn die Batterie nicht mehr ausreichend geladen ist.

Damit wird auf eine sehr einfache Weise die Batteriekontrolle ermöglicht, ohne daß dazu weitere Bauteile erforderlich wären.

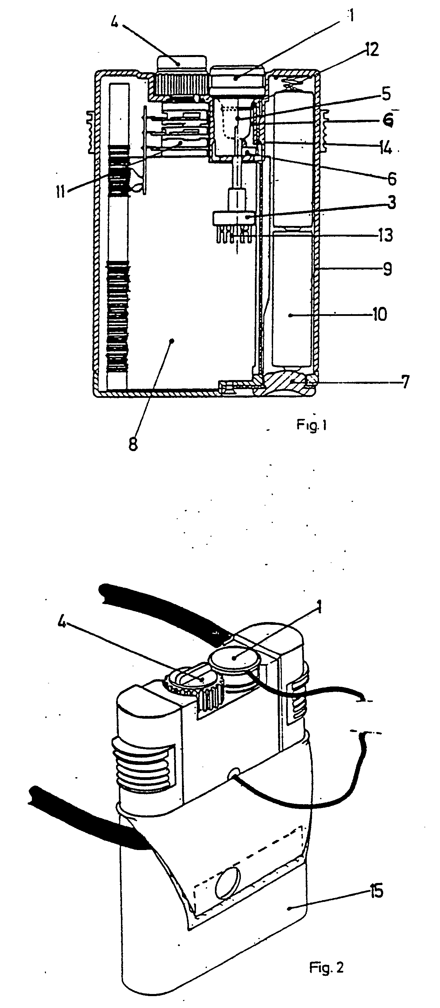

Die Erfindung wird nun an Hand der Zeichnung näher erläutert. Dabei zeigt Fig. 1 eine Schnittdarstellung eines Längsschnittes durch ein erfindungsgemäßes Suchgerät mit eingestecktem Ohrhörer, Fig. 2 bis 4 das Gerät bei geöffneter Tragtasche in verschiedenen Betriebszuständen.

Das dargestellte Gerät besteht aus einem Kunststoffgehäuse 9, das wasserdicht alle Teile des Sende/Empfängers 8 sowie die Batterien umschließt.

An der Geräteunterseite befindet sich ein Verschluß 7 für den die Batterien 10 enthaltenden Batterieschacht, der als Bajonettverschluß ausgebildet ist. Dieser Verschluß 7 ist verliersicher am Gehäuse befestigt.

An der Geräteoberseite sind ein Schaltknopf 4 und der Ohrhörer 1 angeordnet.

Der Schaltknopf 4 ist mit dem Schalter 11 verbunden und dient dem Ein- und Ausschalten und der Lautstärkeregelung des Empfangs (mittels Potentiometer und Schalter 11, oder eines mehrstufigen Schalters).

Der Ohrhörer 1, der mit dem übrigen Gerät über eine flexible Verbindungsleitung unlösbar verbunden ist, wird im Bereich der Ohrolive 5 vom hutförmigen Stößel 6 umschlossen. Der Ohrhörer nimmt mittels des im Stößel 6 gehaltenen O-Rings 12 beim Herausziehen den Stößel 6 mit, bis der mit dem Stößel 6 verbundene Anschlag 3 zur Anlage an dem Gehäuse 9 kommt. Dadurch wird der Schalter 13 betätigt. Gleichzeitig wird durch den O-Ring 12 ein Schutz gegen das Eindringen von Wasser in den Stößel 6 erreicht. Der Stößel rastet mit dem Haken 14 im herausgezogenen Zustand ein. Er kann sowohl durch Wiedereinstecken des Ohrhörers 1 wie auch ohne Ohrhörer mit dem Finger wieder hinein gedrückt werden.

Alle diese Betätigungen können bei geöffneter Tasche 15, die z. B. einen Klettenverschluß aufweist, mit behandschuhter Hand erfolgen. Der Schalterknopf 4 weist zu diesem Zweck an seiner Oberseite eine Rippe auf.

Zur Sende- und Batteriekontrolle wird zeitlich synchron mit dem Sendeimpuls ein Kontrollton in den Ohrhörer eingekoppelt. Bei Absinken der Batteriespannung unter einen Grenzwert setzt dieser Ton aus.

Bei der in Fig. 2 dargestellten Lage des Ohrhörers 1, also in dessen in den Stößel eingesteckten Zustand und bei in seiner EIN-Stellung befindlichen Schalter 4 ist das Gerät auf Sendebetrieb geschaltet.

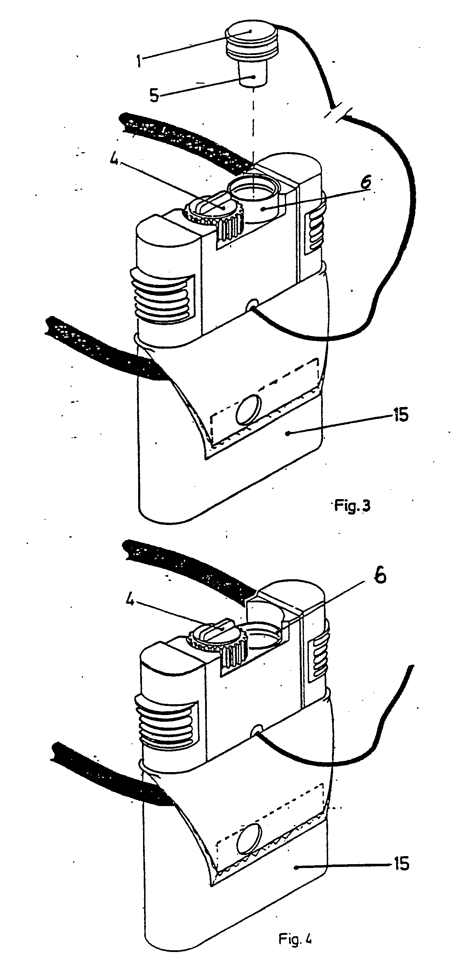

Wird der Ohrhörer 1 aus dem Stößel 6 herausgezogen, wird dadurch, wie bereits erwähnt, auch der Stößel 6 aus dem Gehäuse gezogen, wodurch der Schalter 13 auf Empfangsbetrieb umschaltet. Dies ist in Fig. 3 dargestellt.

Wird der Stößel 6 bei herausgezogenem Ohrhörer 1 in das Gehäuse 9 eingedrückt, wobei der Haken 14 überdrückt wird, so schaltet der Schalter 13 wieder auf Sendebetrieb um.

## Patentansprüche

1. Suchgerät für Lawinenverschüttete, das eine elektronische Schaltung (8) mit einer Sende- und Empfangsfunktion für mindestens eine Suchfrequenz enthält und einen, den Schallwandler enthaltenden Ohrhörer (1) für die Empfangsfunktion aufweist, der in das Gerät einsteckbar ist, wobei ein Schalter (13) vorgesehen ist, der das Gerät bei eingestecktem Ohrhörer (1) auf Sendebetrieb und beim Herausziehen des Ohrhörers (1) auf Empfang schaltet, dadurch gekennzeichnet, daß bei herausgezogenem Ohrhörer (1) ein Stößel (6) an der Außenseite des Gerätes zugänglich ist, der zum Notumschalten des Suchgerätes auf Sendebetrieb betätigbar ist und der Ohrhörer (1) mit dem Gerät über eine Verbindungsleitung untrennbar verbunden ist.

2. Suchgerät nach Patentanspruch 1, dadurch gekennzeichnet, daß eine Umschaltung aus dem notumgeschalteten Zustand Senden, also ohne eingesteckten Ohrhörer (1), auf Empfang nur mit Einstecken und wieder Herausziehen des Ohrhörers (1) möglich ist.

3. Suchgerät nach Patentanspruch 1 oder 2, dadurch gekennzeichnet, daß der Ohrhörer (1) und die Ohrolive (5) in den Stößel (6) steckbar ist, der verschiebbar im Gehäuse (9) des Gerätes gehalten und mit dem Schalter (13) zur Umschaltung von Empfang auf Senden bzw. umgekehrt mechanisch verbunden ist.

4. Suchgerät nach einem der Patentansprüche 1 bis 3, dadurch gekennzeichnet, daß der Ohrhörer (1) im eingesteckten Zustand mit dem Stößel (6) abgedichtet ist, um die Schallöffnung der Ohrolive (5) gegen das Eindringen von Wasser zu schützen.

5. Suchgerät nach Patentanspruch 4, dadurch gekennzeichnet, daß am Stößel (6) ein Dichtring (12) angeordnet ist.

6. Suchgerät nach einem der Patentansprüche 1 bis 5, dadurch gekennzeichnet, daß der Verschiebeweg des Stößels (6) derart ausgebildet ist, daß sein oberer, freier Rand im Schaltzustand Empfangen über die Gehäusewand vorragt und bei Absenken des oberen, freien Randes in die Ebene der den Stößel (6) aufnehmenden Gehäusewand der Schalter (13) auf Senden umschaltbar ist.

7. Suchgerät nach einem der Patentansprüche 1 bis 6, dadurch gekennzeichnet, daß alle Bedienungselemente (1, 4) — ausgenommen der Deckel des Batteriefachs (7) — auf der Oberseite des Gerätes zugänglich sind.

8. Suchgerät nach einem der Patentansprüche 1 bis 7, dadurch gekennzeichnet, daß alle Bedienungselemente (1, 4) — ausgenommen der Deckel des Batteriefachs (7) — so angeordnet sind, daß sie im Bereich von verschließbaren Öffnungen der Umhängetasche angeordnet sind.

9. Suchgerät nach einem der Patentansprüche 1 bis 8, dadurch gekennzeichnet, daß der Ohrhörer (1) im Zustand Senden die Sendeimpulse als Tonimpulse wiedergibt, solange die Batterie ausreichend gelanden ist, und diese akustische Sendekontrolle keine Tonimpulse mehr wiedergibt, wenn die Batterien nicht mehr ausreichend geladen sind.

**Claims**

1. Detector for persons buried in an avalanche, which contains an electronic circuit (8) with a transmitting and receiving function for at least one detection frequency and an earphone (1) for the receiving function containing the acoustic transducer, which earphone can be plugged into the device, a switch (13) being provided which switches the device to transmitting operation when the earphone (1) is plugged in and to receiving when the earplug (1) is withdrawn, characterised in that when the earphone (1) is withdrawn, a plunger (6) on the outside of the device is accessible, which can be actuated for emergency switching of the detector to transmitting operation and the earphone (1) is inseparably connected to the device by way of a connecting lead.

2. Detector according to Patent Claim 1, characterised in that a change-over from the emergency switched transmitting state, thus without the earphone (1) plugged-in, to receiving, is possible solely by plugging the earphone (1) in and pulling it out again.

3. Detector according to Patent Claim 1 or 2, characterised in that the earphone (1) and the earolive (5) can be inserted in the plunger (6), which is held so that it is able to slide in the housing (9) of the device and is mechanically connected to the switch (13) for changing from receiving to transmitting and vice versa.

4. Detector according to one of Patent Claims 1 to 3, characterised in that, when it is plugged in, the earphone (1) is sealed by the plunger (6), in order to protect the sound aperture of the earolive (5) from the penetration of water.

5. Detector according to Patent Claim 4, characterised in that a sealing ring (12) is located on the plunger (6).

6. Detector according to one of Claims 1 to 5, characterised in that the sliding movement of the plunger (6) is designed so that in the receiving state, its upper, free edge projects beyond the housing wall and upon lowering of the upper, free edge into the plane of the housing wall receiving the plunger (6), the switch (13) can be changed over to transmitting.

7. Detector according to one of Claims 1 to 6, characterised in that all the operating members (1, 4) — except for the lid of the battery compartment (7) — are accessible on the upper side of the device.

8. Detector according to one of Patent claims 1 to 7, characterised in that all the operating members (1, 4) — except the cover of the battery compartment (7) — are arranged so that they are located in the region of closable openings of the shoulder bag.

9. Detector according to one of Patent Claims 1 to 8, characterised in that when transmitting, the earphone (1) reproduces the transmitting pulses as sound pulses, as long as the battery is adequately charged and this acoustic transmitting control no longer reproduces any sound pulses when the batteries are no longer adequately charged.

**Revendications**

1. Appareil de recherche pour personnes ensevelies par une avalanche, qui contient un circuit électronique (8) à fonction émettrice et réceptrice pour au moins une fréquence de recherche et possède un écouteur (1) contenant le transducteur acoustique pour la fonction émettrice et qui est enfichable dans l'appareil, un commutateur (13) étant prévu qui, lorsque l'écouteur (1) est enfiché dans l'appareil, commute l'appareil sur émission et, lorsqu'on extrait l'écouteur (1), commute sur réception, caractérisé par le fait que lorsque l'écouteur (1) est extrait, un poussoir (6) est accessible sur la face extérieure de l'appareil, et peut être actionné pour commuter en secours l'appareil sur émission, et l'écouteur (1) est relié, de façon inséparable, à l'appareil par un conduit de liaison.

2. Appareil de recherche selon la revendication 1, caractérisé par le fait qu'une commutation, passant de l'état commuté en secours sur émission, donc sans écouteur (1) enfiché, à la réception, n'est possible qu'en enfichant puis ressortant l'écouteur (1).

3. Appareil de recherche selon la revendication 1 ou 2, caractérisé par le fait que l'écouteur (1) et l'olive auriculaire (5) sont enfichables dans le poussoir (6) qui est maintenu, déplaçable, dans le boîtier (9) de l'appareil et est relié mécaniquement avec le commutateur (13) pour commuter de réception à émission, ou inversement.

4. Appareil de recherche selon l'une des revendications 1 à 3, caractérisé par le fait que l'écouteur (1), dans son état enfiché, est rendu étanche avec le poussoir (6), pour protéger l'ouverture acoustique de l'olive auriculaire (5) contre la pénétration de l'eau.

5. Appareil de recherche selon la revendication 4, caractérisé par le fait qu'une bague d'étanchéité (12) est disposée sur le poussoir (6).

6. Appareil de recherche selon l'une des revendications 1 à 5, caractérisé par le fait que la course de déplacement du poussoir (6) est conçue de façon que son bord libre supérieur, à l'état commuté réception, fasse saillie par rapport à la paroi du boîtier et que le commutateur (13) soit commutable à réception par abaissement du bord libre supérieur dans le plan de la paroi de boîtier recevant le poussoir (6).

7. Appareil de recherche selon l'une des revendications 1 à 6, caractérisé par le fait que tous les éléments de service (1, 4) — excepté le couvercle du logement de batterie (7) — sont accessibles sur le côté supérieur de l'appareil.

8. Appareil de recherche selon l'une des revendications 1 à 7, caractérisé par le fait que tous les éléments de manœuvre (1, 4) — excepté le couvercle du logement de batterie (7) — sont disposés de façon à être situés dans la zone d'ouvertures obturables de la sacoche.

9. Appareil de recherche selon l'une des revendications 1 à 8, caractérisé par le fait que l'écouteur, dans l'état émission, répète les impulsions d'émission sous forme d'impulsions sonores tant que la batterie est suffisamment chargée, et ce contrôle acoustique d'émission ne répète plus d'impulsions sonores lorsque les batteries ne sont plus suffisamment chargées.

Fig. 1

Fig. 2

Fig. 3

Fig. 4